(19) Europäisches Patentamt
European Patent Office
Office européen des brevets

(11) Veröffentlichungsnummer: **0 353 573 A1**

(12) **EUROPÄISCHE PATENTANMELDUNG**

(21) Anmeldenummer: **89113509.7**

(22) Anmeldetag: **22.07.89**

(51) Int. Cl.[4]: **C07F 9/165 , A01N 57/02 , C07F 9/40 , C07F 9/20 , C07F 9/42**

(30) Priorität: **04.08.88 DE 3826450**

(43) Veröffentlichungstag der Anmeldung:
**07.02.90 Patentblatt 90/06**

(84) Benannte Vertragsstaaten:
**AT BE CH DE ES FR GB GR IT LI NL**

(71) Anmelder: **BAYER AG**

**D-5090 Leverkusen 1 Bayerwerk(DE)**

(72) Erfinder: **Sommer, Herbert, Dr.**
**Platz 59**
**D-5630 Remscheid(DE)**
Erfinder: **Arlt, Dieter, Prof. Dr.**
**Rybnikerstrasse 2**
**D-5000 Köln 80(DE)**
Erfinder: **Hartwig, Jürgen, Dr.**
**Franz-Esser-Strasse 44**
**D-5090 Leverkusen 3(DE)**
Erfinder: **Matthaei, Hans-Detlef, Dr.**
**Paul-Klee-Strasse 67**
**D-5090 Leverkusen 1(DE)**

(54) **Dithiophosphor (phosphon) säureester, Verfahren zu ihrer Herstellung und ihre Verwendung als Schädlingsbekämpfungsmittel.**

(57) Die Erfindung betrifft neue Dithiophosphor(phosphon)säureester der allgemeinen Formel

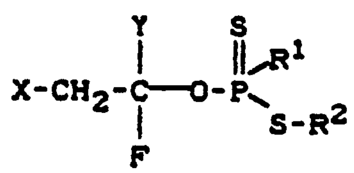

(I)

in welcher
$R^1$ für gegebenenfalls substituierte Reste aus der Reihe Alkyl, Alkenyl, Alkoxy, Alkenyloxy und Alkinyloxy (vorzugsweise Alkoxy) steht,
$R^2$ für gegebenenfalls substituierte Reste aus der Reihe Alkyl, Cycloalkyl, Alkenyl oder Alkinyl steht,
X für Halogen steht und
Y für Wasserstoff oder Halogen steht, welche als Schädlingsbekämpfungsmittel verwendet werden können.

EP 0 353 573 A1

**Dithiophosphor(phosphon)säureester, Verfahren zu ihrer Herstellung und ihre Verwendung als Schädlingsbekämpfungsmittel**

Die Erfindung betrifft neue Dithiophosphor(phosphon)säureester, ein Verfahren zu ihrer Herstellung, ihre Verwendung als Schädlingsbekämpfungsmittel, insbesondere als Insektizide, Akarizide und Nematizide.

Es ist bereits bekannt, daß bestimmte Thionophosphor(phosphon)säureamidester, wie zum Beispiel O-Methyl-O-(2-chlor-1-fluor-ethyl)-thionosphosphorsäurediesteramid, pestizid wirksam sind (vgl. DE-OS 26 29 016 und die entsprechende US-PS 4 159 324). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellend.

Es wurden nun neue Dithiophosphor(phosphon)säureester der allgemeinen Formel

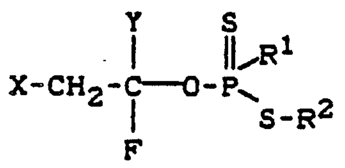

(I)

gefunden,
in welcher
$R^1$ für gegebenenfalls substituierte Reste aus der Reihe Alkyl, Alkenyl, Alkoxy, Alkenyloxy und Alkinyloxy (vorzugsweise Alkoxy) steht,
$R^2$ für gegebenenfalls substituierte Reste aus der Reihe Alkyl, Cycloalkyl, Alkenyl oder Alkinyl steht,
X für Halogen steht und
Y für Wasserstoff oder Halogen steht.

Die Verbindungen der Formel (I) besitzen ein asymmetrisch substituiertes Kohlenstoffatom, wenn Y von Fluor verschieden ist und ein asymmetrisch substituiertes Phosphoratom. Sie können daher in verschiedenen optischen Isomerenformen vorliegen, die in unterschiedlichen Mengenverhältnissen anfallen können. In allen Fällen liegen sie vorwiegend als Racemate vor. Die Erfindung betrifft sowohl die Isomerengemische als auch die einzelnen Isomeren.

Weiterhin wurde gefunden, daß man die neuen Dithiophosphor(phosphon)säureester der Formel (I) erhält,
wenn man Thionophosphor(phosphon)säureesterhalogenide der Formel

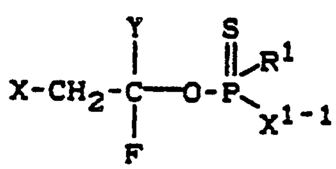

(II)

in welcher
X, Y und $R^1$ die oben angegebene Bedeutung haben und
$X^{1-1}$ für Halogen, vorzugsweise Chlor, steht,
mit Mercaptanen der Formel
HS - $R^2$ (III)
in welcher
$R^2$ die oben angegebene Bedeutung hat,
oder deren Salze,
gegebenenfalls in Gegenwart eines Verdünnungsmittels und gegebenenfalls in Gegenwart eines Säureakzeptors umsetzt.

Die neuen Dithiophosphor(phosphon)säureester der Formel (I) zeichnen sich in überragender Weise durch eine besonders hohe Wirksamkeit als Schädlingsbekämpfungsmittel, insbesondere als Insektizide, Akarizide und Nematizide aus.

Die erfindungsgemäßen Stoffe stellen somit eine wertvolle Bereicherung der Technik dar.

Als gegebenenfalls substituiertes Alkyl in der Definition von $R^1$ und $R^2$ in den allgemeinen Formeln,

steht geradkettiges oder verzweigtes Alkyl mit vorzugsweise 1 bis 20, besonders bevorzugt 1 bis 12, insbesondere 1 bis 6 und ganz besonders bevorzugt 1 bis 4 Kohlenstoffatomen. Beispielhaft seien gegebenenfalls substituiertes Methyl, Ethyl, n-Propyl, i-Propyl, n-Butyl, sec-Butyl, i-Butyl, tert-Butyl, n-Pentyl, i-Pentyl und tert-Pentyl genannt.

Für den Begriff gegebenenfalls substituiertes Alkenyl selbst oder als Bestandteil der Gruppe Alkenyloxy in den Definitionen von $R^1$ und $R^2$ in den allgemeinen Formeln steht geradkettiges oder verzweigtes Alkenyl mit vorzugsweise 2 bis 8, besonders bevorzugt 2 bis 6 und insbesondere 2 bis 4, ganz besonders bevorzugt 3 Kohlenstoffatomen. Beispielhaft seien gegebenenfalls substituiertes Vinyl, Allyl, 2-Butenyl, 3-Butenyl und 1-Methallyl genannt.

Unter dem Begriff gegebenenfalls substituiertes Alkoxy in der Definition von $R^1$ in den allgemeinen Formeln ist geradkettiges oder verzweigtes Alkoxy mit vorzugsweise 1 bis 6, insbesondere 1 bis 4 Kohlenstoffatomen zu verstehen. Beispielhaft seien gegebenenfalls substituiertes Methoxy, Ethoxy, Propoxy, Butoxy sowie ihre Isomeren, wie z. B. i-Propoxy, i-, s- und tert-Butoxy genannt, wobei als besonders bevorzugt gegebenenfalls substituiertes Methoxy und Ethoxy aufgeführt werden.

Unter dem Begriff gegebenenfalls substituiertes Alkinyl selbst oder als Bestandteil der Gruppe Alkinyloxy in den Definitionen $R^1$ und $R^2$ in den allgemeinen Formeln ist geradkettiges oder verzweigtes Alkinyl mit vorzugsweise 2 bis 6, insbesondere 2 bis 4, besonders bevorzugt 3 Kohlenstoffatomen zu verstehen. Beispielhaft seien gegebenenfalls substituiertes Ethinyl, 2-Propinyl, 2-Butinyl, 3-Butinyl und 1-Methyl-2-propinyl genannt.

Als gegebenenfalls substituiertes Cycloalkyl in der Definition $R^2$ steht Cycloalkyl mit vorzugsweise 3 bis 8, insbesondere 3, 5 oder 6 Kohlenstoffatomen.

Beispielhaft seien gegebenenfalls substituiertes Cyclopropyl, Cyclobutyl, Cyclopentyl, Cyclohexyl und Cycloheptyl genannt.

Die in der Definition von $R^1$ und $R^2$ genannten substituierten Reste können einen oder mehrere, vorzugsweise 1 bis 3, insbesondere 1 oder 2 gleiche oder verschiedene Substituenten tragen. Als bevorzugte Substituenten für Alkyl, Alkenyl und Alkinyl seien aufgeführt:

Alkoxy mit 1 bis 4 Kohlenstoffatomen, wie Methoxy, Ethoxy, n-Propoxy, i-Propoxy, n-Butoxy, i-Butoxy, sec-Butoxy, tert-Butoxy und Halogen (Fluor, Chlor, Brom und Iod, vorzugsweise Fluor, Chlor oder Brom, insbesondere Fluor oder Chlor).

Die bevorzugten Substituenten der Reste Alkoxy, Alkenyloxy und Alkinyloxy sind die Halogene wie Fluor, Chlor, Brom und Iod, insbesondere Fluor, Chlor und Brom und/oder Alkoxy mit vorzugsweise 1 bis 4 Kohlenstoffatomen, insbesondere Methoxy oder Ethoxy.

Als bevorzugte Substituenten für Cycloalkyl seien aufgeführt:

Alkyl mit 1 bis 4 Kohlenstoffatomen, wie Methyl, Ethyl, n-Propyl, i-Propyl, n-Butyl, i-Butyl, sec-Butyl und tert-Butyl, Halogenalkyl mit vorzugsweise 1 bis 4, insbesondere 1 oder 2 Kohlenstoffatomen und vorzugsweise 1 bis 5, insbesondere 1 bis 3 Halogenatomen (vorzugsweise Fluor, Chlor und/oder Brom, insbesondere Fluor und/oder Chlor, wie z.B. Trifluormethyl und Halogen.

Halogen, in der Definition X und $X^{1-1}$ in den allgemeinen Formeln sowie als Substituenten für eine Gruppe, steht für Fluor, Chlor, Brom und/oder Iod, insbesondere Fluor, Chlor und/oder Brom und besonders bevorzugt im Falle von X für Chlor oder Brom, ganz besonders bevorzugt für Chlor, und im Falle von $X^{1-1}$ für Chlor.

Vorzugsweise sind die Reste $R^1$ und $R^2$ unsubstituiert.

In den allgemeinen Formeln steht $R^1$ vorzugsweise für gegebenenfalls durch Fluor und/oder Chlor substituiertes Alkyl oder Alkoxy mit vorzugsweise 1 bis 6, insbesondere 1 bis 4 Kohlenstoffatomen. Besonders bevorzugt steht $R^1$ für Methoxy oder Ethoxy.

Vorzugsweise steht in den allgemeinen Formeln $R^2$ für gegebenenfalls durch Fluor, Chlor oder Brom oder durch $C_1$-$C_4$-Alkoxy substituiertes Alkyl mit vorzugsweise 1 bis 6, insbesondere 1 bis 4 Kohlenstoffatomen, für Cycloalkyl mit 3, 5 oder 6 Kohlenstoffatomen oder für Alkenyl oder Alkinyl mit 2 bis 4 Kohlenstoffatomen. Besonders bevorzugt steht $R^2$ für Propyl oder Butyl (vorzugsweise verzweigtes Butyl).

Y steht in den allgemeinen Formeln vorzugsweise für Wasserstoff.

Von der erfindungsgemäßen Dithiophosphor(phosphon)säureestern der Formel (I) sind diejenigen bevorzugt,

in welchen

$R^1$ für gegebenenfalls durch Halogen oder $C_1$-$C_4$-Alkoxy substituiertes $C_1$-$C_6$-Alkyl und $C_2$-$C_4$-Alkenyl; für gegebenenfalls durch Halogen und/oder $C_1$-$C_4$-Alkoxy substituiertes $C_1$-$C_6$-Alkoxy, $C_2$-$C_4$-Alkenyloxy und $C_2$-$C_4$-Alkinyloxy (vorzugsweise für gegebenenfalls durch Halogen substituiertes $C_1$-$C_4$-Alkoxy) steht,

$R^2$ für gegebenenfalls durch Halogen und/oder $C_1$-$C_4$-Alkoxy substituiertes $C_1$-$C_6$-Alkyl; für gegebenenfalls durch $C_1$-$C_4$-Alkyl und/oder Halogen substituiertes Cycloalkyl mit 3 bis 8 Kohlenstoffatomen; für gegebenenfalls durch Halogen, Methyl und/oder Ethyl substituiertes $C_2$-$C_4$-Alkenyl und $C_2$-$C_4$-Alkinyl steht,
X für Fluor, Chlor oder Brom (vorzugsweise Chlor oder Brom) steht und
Y für Wasserstoff, Fluor, Chlor oder Brom (vorzugsweise Wasserstoff) steht.

Besonders bevorzugt sind diejenigen Dithiophosphor(phosphon)säureester der Formel (I), in welchen
$R^1$ für gegebenenfalls durch Fluor, Chlor, Methoxy und/oder Ethoxy substituiertes $C_1$-$C_2$-Alkyl und $C_2$-$C_3$-Alkenyl; für gegebenenfalls durch Fluor, Chlor, Methoxy und/oder Ethoxy substituiertes $C_1$-$C_4$-Alkoxy, $C_2$-$C_3$-Alkenyloxy und $C_2$-$C_3$-Alkinyloxy (vorzugsweise für gegebenenfalls durch Halogen substituiertes $C_1$-$C_4$-Alkoxy) steht,
$R^2$ für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlen stoffatomen; für gegebenenfalls durch Fluor und/oder Chlor substituiertes $C_2$-$C_4$-Alkenyl und $C_2$-$C_4$-Alkinyl steht,
X für Fluor, Chlor und Brom (vorzugsweise Chlor oder Brom) steht und
Y für Wasserstoff, Fluor oder Chlor (vorzugsweise Wasserstoff) steht.

Ganz besonders bevorzugt sind diejenigen Dithiophosphor(phosphon)säureester der Formel (I), in welcher
$R^1$ für gegebenenfalls durch Fluor, Chlor und/oder Methoxy substituiertes $C_1$-$C_2$-Alkyl, $C_1$-$C_4$-Alkoxy oder $C_2$-$C_3$-Alkenyloxy (vorzugsweise für $C_1$-$C_2$-Alkyl oder $C_1$-$C_4$-Alkoxy) steht,
$R^2$ für gegebenenfalls durch Fluor, Chlor, Brom und/oder Methoxy substituiertes $C_1$-$C_4$-Alkyl, für Cycloalkyl mit 3 bis 6 Kohlenstoffatmen; für $C_2$-$C_4$-Alkenyl oder $C_2$-$C_4$-Alkinyl (vorzugsweise für $C_1$-$C_4$-Alkyl) steht,
X für Chlor und Brom steht (vorzugsweise für Chlor) steht und
Y für Wasserstoff oder Fluor (vorzugsweise für Wasserstoff) steht.

Ganz besonders hervorgehoben werden diejenigen Dithiophosphor)phosphon)säureester der Formel (I) in welcher
$R^1$ für Methyl, Ethyl, Methoxy, Ethoxy, Propoxy, Butoxy, 2-Chlorethoxy, 2,2,2-Trifluorethoxy oder Allyloxy steht,
$R^2$ für Methyl, Ethyl, n-Propyl, iso-Propyl, n-Butyl, iso-Butyl, sec-Butyl, tert-Butyl, Allyl, Propargyl, Cyclopropyl, Cyclopentyl oder Cyclohexyl steht,
X für Chlor oder Brom steht und
Y für Wasserstoff oder Fluor steht.

Verwendet man als Ausgangsstoffe beispielsweise O-(2-Chlor-1-fluor-ethyl)-O-ethyl-thionophosphorsäurediesterchlorid und sec-Butylmercaptan, so kann der Reaktionsablauf des erfindungsgemäßen Verfahrens durch das folgende Formelschema wiedergegeben werden:

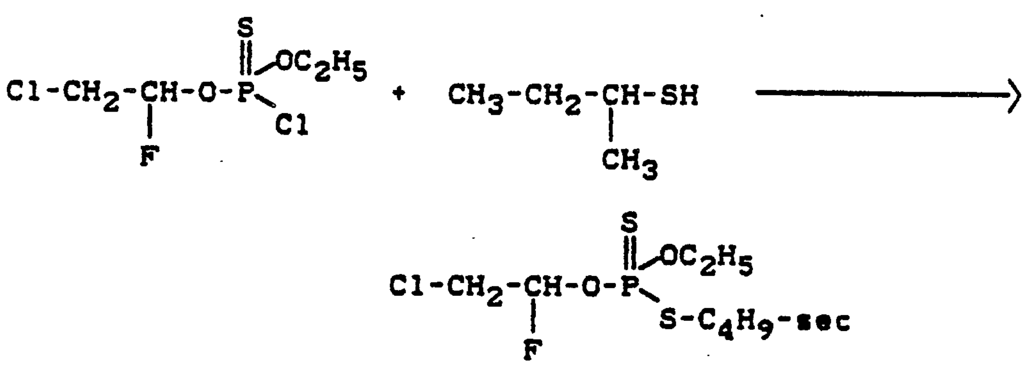

Die bei dem erfindungsgemäßen Verfahren als Ausgangsstoffe zu verwendenden O-(1-Fluor-2-halogen-ethyl)thionophosphor(phosphon)säureesterhalogenide sind durch die Formel (II) allgemeinen definiert. In dieser Formel (II) stehen X, Y, $X^{1-1}$ und $R^1$ vorzugsweise bzw. besonders bevorzugt für diejenigen Reste, welche oben bei den Definitionen für Formel (I) angegeben sind.

Die Thionophosphor(phosphon)säureesterhalogenide der Formel (II) sind neu, ausgenommen die Verbindungen O-(2-Chlor-1-fluor-ethyl)-methan-, -ethan-, -n-propan- und -iso-propan-thionophosphonsäureesterchlorid und O-Methyl-, O-Ethyl-, O-n-Propyl- und O-iso-Propyl-O-(2-chlor-1-fluor-ethyl)-thionophosphorsäurediesterchlorid (DE-OS 26 29 016, entsprechend US-PS 4 159 324 und DE-OS 26 30 561, entsprechend US-PS 4 119 715) und Teil der vorliegenden Erfindung.

Man erhält die Verbindungen der Formel (II), wenn man

(A) Phosphor(phosphon)säure(di)esterhalogenide der Formel

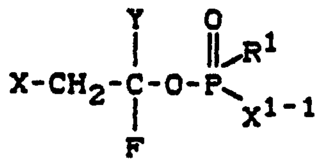

(IV)

in welcher

X, Y,$X^{1-1}$ und $R^1$ die oben angegebene Bedeutung haben,

mit Thiophosphorylchlorid der Formel

$PSCl_3$ (V)

gegebenenfalls in Gegenwart eines Verdünnungsmittels und gegebenenfalls in Gegenwart eines Phosphorsulfids, wie beispielsweise Phosphor(V)sulfid ($P_2S_5$, $P_4S_{10}$) oder 2,4-bis-(4-Methoxyphenyl)-1,3,2,4-dithiadiphosphetan-2,4-disulfid Lawesson's Reagenz) umsetzt oder

(B) Phosphorsäureesterdihalogenide der Formel

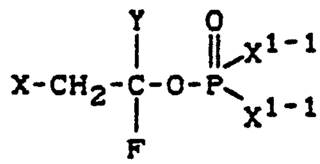

(VI)

in welcher

X, Y und $X^{1-1}$ die oben angegebene Bedeutung haben,

mit Thiophosphorylchlorid der Formel (V) zunächst in einer ersten Stufe gegebenenfalls in Gegenwart eines Verdünnungsmittels und gegebenenfalls in Gegenwart eines Phosphorsulfids, wie beispielsweise Phosphor(V)sulfid ($P_2S_5$, $P_4S_{10}$) oder 2,4-bis-(4-Methoxyphenyl)-1,3,2,4-dithiadiphosphetan-2,4-disulfid (Lawesson's Reagenz) umsetzt, das intermediär auftretende Zwischenprodukt der Formel

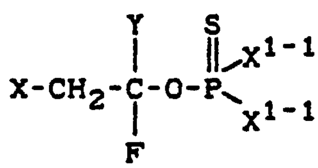

(VII)

in welcher

X, Y und $X^{1-1}$ die oben angegebene Bedeutung haben,

gegebenenfalls isoliert

und in einer zweiten Stufe, nach allgemein bekannten Verfahren, mit Alkoholen der Formel

$R^{1-1}$-OH (VIII)

in welcher

$R^{1-1}$ für gegebenenfalls substituierte Reste aus der Reihe Alkyl und Alkenyl steht, wie sie allgemein und speziell für $R^1$ definiert werden,

gegebenenfalls in Form der entsprechenden Alkali-oder Erdalkalimetallsalze, gegebenenfalls in Gegenwart eines Säureakzeptors und gegebenenfalls in Gegenwart eines Lösungsmittels umsetzt (vgl. DE-OS 26 29 016 und DE-OS 26 30 561).

Als Verdünnungsmittel zur Herstellung der Verbindungen der Formel (II) gemäß Verfahrensvariante (A) kommen praktisch inerte organische Lösungsmittel sowie Thiophosphorylchlorid infrage.

Hierzu gehören vorzugsweise aromatische, gegebenenfalls halogenierte Kohlenwasserstoffe, wie Toluol, Xylol, Chlorbenzol, o-Dichlorbenzol, Dichlortoluol und Mono-oder Dichlorxylol. Besonders bevorzugt ist Thiophosphorylchlorid.

Das bei der Verfahrensvariante (A) als Ausgangsstoff zu verwendende Thiophosphorylchlorid ist eine allgemein bekannte Verbindung der anorganischen Chemie.

Die bei der Verfahrensvariante (A) außerdem als Ausgangsstoffe zu verwendenden Verbindungen der

Formel (IV) sind bekannt und/oder können nach allgemein bekannten Verfahren und Methoden hergestellt werden (vgl. DE-OS 26 29 016).

Bei dem Verfahren (A) zur Herstellung der Verbindungen der Formel (II) arbeitet man im allgemeinen bei Temperaturen zwischen 100 °C und 160 °C, vorzugsweise bei Temperaturen zwischen 120 °C und 140 °C.

Bei der Durchführung des Verfahrens (A) zur Herstellung der Verbindungen der Formel (II) setzt man 1 Mol Ausgangsstoff der Formel (IV) mit 1 bis 20 Mol, vorzugsweise 1 bis 6 Mol Thiophosphorylchlorid und 0,0001 bis 0,2 Mol, vorzugsweise 0,001 bis 0,01 Mol Phosphor(V)sulfid um. Die Umsetzungen werden im allgemeinen bei Normaldruck durchgeführt.

Bei der Durchführung des Verfahrens (A) zur Herstellung der Verbindungen der allgemeinen Formel (II) wird der Ausgangsstoff der Formel (IV) in einem der angegebenen Lösungsmittel, besonders bevorzugt Thiophosphorylchlorid, zusammen mit Phosphor(V)sulfid unter Rückfluß erhitzt, wobei das gebildete Phosphoroxychlorid laufend abdestilliert wird. Nach beendeter Reaktion können die als Rohprodukte anfallenden Verbindungen der Formel (II) in konventioneller Weise gereinigt werden, vorteilhaft durch fraktionierte Destillation unter vermindertem Druck. Zu ihrer Charakterisierung dient der Retentionsindex (Kovats-Index).

Die bei der Verfahrensvariante (B) als Zwischenprodukte zu verwendenden Thiono-phosphorsäuredihalogenide sind durch die Formel (VII) allgemein definiert. In dieser Formel (VII) stehen X, Y und $X^{1-1}$ vorzugsweise bzw. besonders bevorzugt für diejenigen Reste, welche oben bei den Definitionen für Formel (I) angegeben sind.

Die Thionophosphorsäuredihalogenide der Formel (VII) sind bekannt und/oder analog zu Verfahren (A) aus Phosphorsäure-dihalogeniden der Formel (VI) und Thiophosphorylchlorid erhältlich (DE-OS 26 29 016 und DE-OS 26 30 561).

Die bei der Verfahrensvariante (B) außerdem als Ausgangsprodukte zu verwendenden Alkohole sind durch die Formel (VIII) allgemein definiert. In dieser Formel (VIII) steht $R^1$ vorzugsweise bzw. besonders bevorzugt für diejenigen Reste, welche oben bei den Definitionen für Formel (I) angegeben sind.

Die Alkohole der Formel (VIII) sind allgemein bekannte Verbindungen der organischem Chemie.

Das erfindungsgemäße Verfahren zur Herstellung der neuen Verbindungen der Formel (I) wird bevorzugt unter Verwendung von Verdünnungsmitteln durchgeführt.

Hierzu gehören insbesondere aliphatische oder aromatische, gegebenenfalls halogenierte Kohlenwasserstoffe, wie beispielsweise Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Dimethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem Verfahren zur Herstellung der neuen Verbindungen der Formel (I) alle üblicherweise für derartige Umsetzungen verwendbaren Säurebindemittel eingesetzt werden. Vorzugsweise in Frage kommen Erdalkalimetallhydroxide wie z.B. Calcium hydroxid, Alkalicarbonate und -alkoholate wie Natrium-und Kaliumcarbonat, Natrium- und Kaliummethylat bzw. -ethylat und -tert-butylat, ferner aliphatische, aromatische oder heterocyclische Amine, beispielsweise Triethylamin, Trimethylamin, Dimethylanilin, Dimethylbenzylamin, Pyridin, Collidin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Als Salze der Verbindungen der Formel (III) werden vorzugsweise die Alkali- oder Erdalkalisalze (vorzugsweise Natrium- oder Kaliumsalze) eingesetzt.

Die Reaktionstemperaturen können bei dem Verfahren zur Herstellung der Verbindungen der Formel (I) in einem größeren Bereich variiert werden. Im allgemeinen arbeitet man bei Temperaturen zwischen 0 °C und 100 °C, vorzugsweise bei Temperaturen zwischen 20 °C und 60 °C.

Die Umsetzung läßt man im allgemeinen bei Normaldruck ablaufen. Zur Durchführung des erfindungsgemäßen Verfahrens setzt man die Reaktionsteilnehmer vorzugsweise im äquimolaren Verhältnis ein. Ein Überschuß der einen oder anderen Komponente bringt keine wesentlichen Vorteile. Die Reaktion wird vorzugsweise in einem der angegebenen Lösungsmittel in Gegenwart eines Säureakzeptors durchgeführt. Die Aufarbeitung des Ansatzes erfolgt nach üblichen Methoden durch Filtration, Waschen des Filtrats und Abdestillieren des Lösungsmittels.

Die neuen Verbindungen fallen in Form von Ölen an, die sich teilweise nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt

werden können. Zu ihrer Charakterisierung dient der Retentionsindex (Kovats-Index).

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor (vorzugsweise auf oder an Pflanzen) vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phylloc nistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus

dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide Wirksamkeit aus. Sie zeigen insbesondere beim Einsatz als Bodeninsektizide eine hervorragende Wirkung gegen Maden, wie z.B. Phorbia antiqua-Maden sowie eine hervorragende Wirkung gegen Nematoden, wie z.B. Meliodogyne incognita.

Die erfindungsgemäßen Wirkstoffe zeichnen sich durch eine hervorragende insektizide Wirksamkeit, insbesondere bei der Bekämpfung von Coleoptera-Arten, wie z.B. Sitophilus granarius sowie zur Bekämpfung von Hygieneschädlingen, wie z.B. Musca domestica-Dipteren aus.

Einige der erfindungsgemäßen Wirkstoffe zeigen auch eine gute blattinsektizide und akarizide Wirkung.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwen det werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu

95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

## Herstellungsbeispiele:

### Beispiel 1:

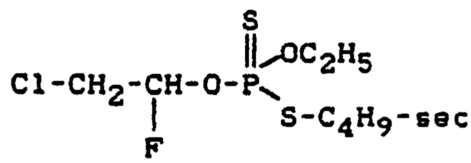

2,7 g (0,03 Mol) sec-Butylmercaptan und 3,4 g (0,03 Mol) Kalium-tert-butylat werden in 100 ml Toluol 1 Stunde auf 50 °C erhitzt. Zu dieser Mischung tropft man bei 0 °C 7,2 g (0,03 Mol) O-Ethyl-O-(2-chlor-1-fluorethyl)thionophosphorsäurediesterchlorid und rührt anschließend 16 Stunden bei Raumtemperatur.

Das Reaktionsgemsich wird 2 x mit Wasser gewaschen, die organische Phase abgetrennt, über Magnesiumsulfat getrocknet, das Toluol abgedampft und der Rückstand unter stark vermindertem Druck andestilliert.

Man erhält 5,5 g (62 % der Theorie) O-Ethyl-O-(2-chlor-1-fluor-ethyl)-S-(sec-butyl)-dithiophosphorsäureester mit dem Retentionsindex 1587, 1593*.

(* Die Retentionsindices (Kovats-Index) wurden gaschromatographisch auf einer Siedepunktphase (Dimethylsilicon) ermittelt.)

In analoger Weise zu Beispiel (1) und unter Berücksichtigung der Angaben in der Beschreibung zu dem erfindungsgemäßen Verfahren, werden die in der folgenden Tabelle 1 aufgeführten Endprodukte der Formel

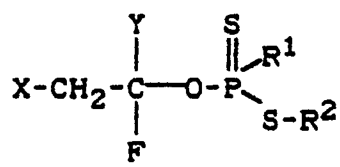 (I)

erhalten:

Tabelle: 1

| Bsp, Nr. | X | Y | $R^1$ | $R^2$ | Retentions-Index* |
|---|---|---|---|---|---|
| 2 | Cl | H | $OC_2H_5$ | $C_3H_7$ | 1561, 1566 |
| 3 | Cl | H | $OC_2H_5$ | $C_2H_5$ | 1484 |
| 4 | Cl | H | $OCH_3$ | $C_3H_7$ | 1514, 1519 |
| 5 | Cl | H | $OC_2H_5$ | $C_3H_7$-i | 1511, 1515 |
| 6 | Cl | H | $OC_2H_5$ | $C_4H_9$-t | 1583, 1590 |
| 7 | Cl | H | $OC_2H_5$ | $C_4H_9$-i | 1604, 1611 |
| 8 | Cl | H | $OC_2H_5$ | $C_4H_9$-n | 1655, 1661 |
| 9 | Cl | F | $C_2H_5$ | $C_4H_9$-s | 1546 |
| 10 | Br | H | O-$CH_2CH_2Cl$ | $C_4H_9$-s | 1903 |
| 11 | Cl | F | $C_2H_5$ | $C_3H_7$ | 1505 |
| 12 | Cl | F | $C_2H_5$ | $C_4H_9$-t | 1529 |
| 13 | Cl | F | $OC_2H_5$ | $C_4H_9$-s | 1544 |
| 14 | Br | H | $=C_2H_5$ | $C_4H_9$-s | 1682, 1689 |
| 15 | Br | F | $C_2H_5$ | $C_4H_9$-s | 1632 |
| 16 | Br | F | $C_2H_5$ | $C_3H_7$ | 1596 |
| 17 | Br | F | $C_2H_5$ | $C_2H_5$ | 1510 |
| 18 | Br | F | $C_2H_5$ | $C_4H_9$-t | 1622 |
| 19 | Br | F | $C_2H_5$ | $C_3H_7$-i | 1536 |
| 20 | Br | F | $C_2H_5$ | $C_4H_9$-i | 1666 |
| 21 | Br | F | $C_2H_5$ | $C_4H_9$ | 1690 |

* Die Retentionsindices (Kovats-Index) wurden gaschromatographisch auf einer Siedepunktphase (Dimethylsilicon) ermittelt.

Herstellung von Ausgangsprodukten

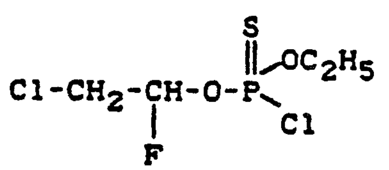

(II-1)

Eine Lösung von 133,4 g (0,58 Mol) O-(2-Chlor-1-fluorethyl-thionophosphorsäuredichlorid in 900 ml Toluol versetzt man bei 0° C mit 204 g (0,6 Mol) einer 20 %igen Natriumethylatlösung, rührt das Gemisch 16 Stunden bei Raumtemperatur nach, wäscht es 2 mal mit Wasser, trocknet die organische Phase über Magnesiumsulfat und dampft das Toluol unter vermindertem Druck ab.
Man erhält 115,9 g (83 % der Theorie) O-Ethyl-O-(2-chlor-1-fluor-ethyl)-thionophosphorsäurediesterchlorid.

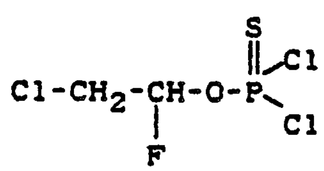

479,2 g (2,22 Mol) O-(2-Chlor-1-fluor-ethyl)-phosphorsäureesterchlorid, 1500 g (8,85 Mol) Thiophosphorylchlorid und 12,7 g (0,057 Mol) Phosphor(V)sulfid werden 5 Tage auf 140° C Badtemperatur erhitzt und anschließend destilliert.

Man erhält 430 g (83,8 % der Theorie) O-(2-Chlor-1-fluorethyl)-thionophosphorsäurediesterchlorid vom Siedepunkt 43 °C/ 0,9 mbar.

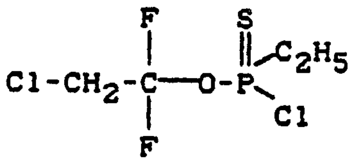

170 g (0,75 Mol) O-(2-Chlor-1,1-difluor-ethyl)-ethanphosphonsäureesterchlorid, 473 g (2,8 Mol) Thiophosphorylchlorid und 3,4 g (0,016 Mol) Phosphor(V)sulfid werden 5 Tage auf 140 °C Badtemperatur erhitzt und anschließend destilliert.
Man erhält 92,2 g (50,6 % der Theorie) O-(2-Chlor-1,1-difluor-ethyl)-ethanthionophosphonsäureesterchlorid vom Siedepunkt 56 °C/ 1,5 mbar mit dem Retentionsindex 1159*

(* Die Retentionsindices (Kovats-Index) wurden gaschromatographisch auf einer Siedepunktphase (Dimethylsilicon) ermittelt.)

## Verwendungsbeispiele

In den nachfolgenden Verwendungsbeispielen wurde die nachstehend angegebene Verbindung als Vergleichsverbindung eingesetzt:

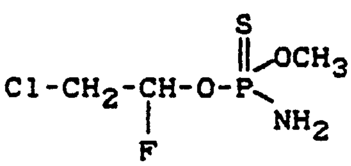

(A)

(bekannt aus DE-OS 26 29 016)

## Beispiel A

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. die Verbindungen der Herstellungsbeispiele 1, 2, 4, 5, 6,7, 8, 9, 10, 12, 14 und 18 bei einer beispielhaften Konzentration von 20 ppm einen Wirkungsgrad von 100 % und die Verbindung des Herstellungsbeispiels 3 bei einer beispielhaften Konzentration von 20 ppm einen Wirkungsgrad von 95 %, während die Vergleichsverbindung bei der gleichen Konzentration einen Wirkungsgrad von 0 % ergab.

Beispiel B

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden, vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigte z.B. die Verbindung des Herstellungsbeispiels (1) bei einer beispielhaften Konzentration von 2,5 ppm eine Wirkung von 95 % und die Verbindungen der Herstellungsbeispiele (2) und (6) bei einer beispielhaften Konzentration von 2,5 ppm eine Wirkung von 100 %, während die Vergleichsverbindung bei der gleichen Konzentration eine Wirkung von 0 % ergab.

Beispiel C

$LT_{100}$-Test für Dipteren

Testtiere: Musca domestica
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

In diesem Test zeigte z.B. die Verbindung des Herstellungsbeispiels 4 bei einer beispielhaften Konzentration von 0,002 % eine $LT_{100}$ von 130′, während die Vergleichsverbindung bei der gleichen Konzentration eine $LT_{100}$ von 240′ ergab.

Beispiel D

$LD_{100}$-Test

Testtiere: Sitophilus granarius
Anzahl der Testtiere: 20
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff prom$^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigte z.B. die Verbindung des Herstellungsbeispiels 4 bei einer beispielhaften Konzentration von 0,002 % Abtötungen von 100 %, während die Vergleichsverbindung bei der gleichen Konzentration eine Abtötung von 30 % ergab.

**Ansprüche**

1. Dithiophosphor(phosphon)säureester der allgemeinen Formel

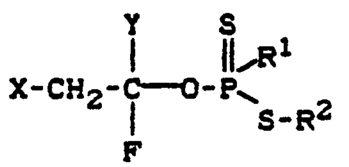

(I)

in welcher

$R^1$ für gegebenenfalls substituierte Reste aus der Reihe Alkyl, Alkenyl, Alkoxy, Alkenyloxy und Alkinyloxy steht,

$R^2$ für gegebenenfalls substituierte Reste aus der Reihe Alkyl, Cycloalkyl, Alkenyl oder Alkinyl steht,

X für Halogen steht und

Y für Wasserstoff oder Halogen steht.

2. Dithiophosphor(phosphon)säureester der Formel (I) gemäß Anspruch 1,

in welchen

$R^1$ für gegebenenfalls durch Halogen oder $C_1$-$C_4$-Alkoxy substituiertes $C_1$-$C_6$-Alkyl und $C_2$-$C_4$-Alkenyl; für gegebenenfalls durch Halogen und/oder $C_1$-$C_4$-Alkoxy substituiertes $C_1$-$C_6$-Alkoxy, $C_2$-$C_4$-Alkenyloxy und $C_2$-$C_4$-Alkinyloxy steht,

$R^2$ für gegebenenfalls durch Halogen und/oder $C_1$-$C_4$- Alkoxy substituiertes $C_1$-$C_6$-Alkyl; für gegebenenfalls durch $C_1$-$C_4$-Alkyl und/oder Halogen substituiertes Cycloalkyl mit 3 bis 8 Kohlenstoffatomen; für gegebenenfalls durch Halogen, Methyl und/oder Ethyl substituiertes $C_2$-$C_4$-Alkenyl und $C_2$-$C_4$- Alkinyl steht,

X für Fluor, Chlor oder Brom steht und

Y für Wasserstoff, Fluor, Chlor oder Brom steht.

3. Dithiophosphor(phosphon)säureester der Formel (I) gemäß Anspruch 1,

in welchen

$R^1$ für gegebenenfalls durch Fluor, Chlor, Methoxy und/oder Ethoxy substituiertes $C_1$-$C_2$-Alkyl und $C_2$-$C_3$-Alkenyl; für gegebenenfalls durch Fluor, Chlor, Methoxy und/oder Ethoxy substituiertes $C_1$-$C_4$- Alkoxy, $C_2$-$C_3$-Alkenyloxy und $C_2$-$C_3$-Alkinyloxy steht,

$R^2$ für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor und/ oder Chlor substituiertes $C_2$-$C_4$-Alkenyl und $C_2$-$C_4$-Alkinyl steht,

X für Fluor, Chlor und Brom steht und

Y für Wasserstoff, Fluor oder Chlor steht.

4. Verbindungen der Formel (I) gemäß Anspruch 1,

in welchen

Y für Wasserstoff steht.

5. Verfahren zur Herstellung von Dithiophosphor(phosphon)säureester der allgemeinen Formel

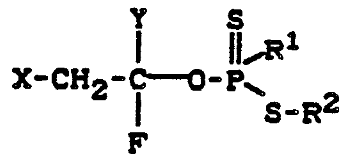 (I)

in welcher
$R^1$ für gegebenenfalls substituierte Reste aus der Reihe Alkyl, Alkenyl, Alkoxy, Alkenyloxy und Alkinyloxy (vorzugsweise Alkoxy) steht,
$R^2$ für gegebenenfalls substituierte Reste aus der Reihe Alkyl, Cycloalkyl, Alkenyl oder Alkinyl steht,
X für Halogen steht und
Y für Wasserstoff oder Halogen steht,
dadurch gekennzeichnet,
daß man Thionophosphor(phosphon)säureesterhalogenide der Formel

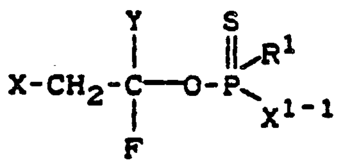 (II)

in welcher
X, Y und $R^1$ die oben angegebene Bedeutung haben und
$X^{1-1}$ für Halogen steht,
mit Mercaptanen der Formel
HS - $R^2$ (III)
in welcher
$R^2$ die oben angegebene Bedeutung hat,
oder deren Salze,
gegebenenfalls in Gegenwart eines Verdünnungsmittels und gegebenenfalls in Gegenwart eines Säureakzeptors umsetzt.

6. Schädlingsbekämpfungsmittel, gekennzeichnet durch einen Gehalt an mindestens einer Verbindung der Formel (I) gemäß Anspruch 1 oder 5.

7. Verwendung von Verbindungen der Formel (I) gemäß Anspruch 1 oder 5 zur Bekämpfung von Schädlingen, insbesondere von Insekten und Nematoden.

8. Verfahren zur Bekämpfung von Schädlingen, dadurch gekennzeichnet, daß man Verbindungen der Formel (I) gemäß Anspruch 1 oder 5 auf Schädlinge, vorzugsweise Insekten und Nematoden oder ihren Lebensraum einwirken läßt.

9. Verfahren zur Herstellung von Schäldlingsbekämpfungsmitteln, dadurch gekennzeichnet, daß man Verbindungen der Formel (I) gemäß Anspruch 1 oder 5 mit Streckmitteln und/oder oberflächenaktiven Mitteln vermischt.

10. Thionophosphor(phosphon)säureesterhalogenide der Formel

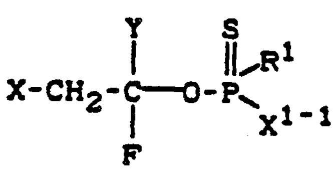 (II)

in welcher
X, Y und $R^1$ die in Anspruch 1 angegebene Bedeutung haben und
$X^{1-1}$ für Halogen steht,
ausgenommen die Verbindungen O-(2-Chlor-1-fluorethyl)-methan-, -ethan-, -n-propan- und -iso-propanthionophosphonsäureesterchlorid und O-Methyl-, O-Ethyl-, O-n-Propyl- und O-iso-Propyl-O-(2-chlor-1-fluorethyl)-thionophosphorsäurediesterchlorid.

Europäisches Patentamt

# EUROPÄISCHER RECHERCHENBERICHT

Nummer der Anmeldung

EP 89 11 3509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y<br>X | DE-A-2 630 561 (BAYER AG)<br>* Insgesamt *<br>--- | 1-9<br>10 | C 07 F 9/165<br>A 01 N 57/02<br>C 07 F 9/40<br>C 07 F 9/20<br>C 07 F 9/42 |
| Y | EP-A-0 205 830 (NIHON TOKUSHU NOYAKU SEIZO K.K.)<br>* Ansprüche *<br>----- | 1-9 | |
| | | | **RECHERCHIERTE SACHGEBIETE (Int. Cl.5)** |
| | | | C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 27-10-1989 | BESLIER L.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)